(19) Europäisches Patentamt

European Patent Office

Office européen des brevets

(11) EP 0 712 581 A1

(12) EUROPEAN PATENT APPLICATION

(43) Date of publication:
22.05.1996 Bulletin 1996/21

(51) Int. Cl.$^6$: **A23K 1/175**, A23L 1/304

(21) Application number: 95117791.4

(22) Date of filing: 10.11.1995

(84) Designated Contracting States:
AT BE CH DE DK ES FR GB GR IE IT LI LU MC NL PT SE

(30) Priority: 15.11.1994 US 339960

(71) Applicant: QUALI TECH, INC.
Chaska, MN 55318 (US)

(72) Inventor: Brokken, Kyle A.
Eden Prairy, MN 55346 (US)

(74) Representative: Liesegang, Roland, Dr.-Ing.
FORRESTER & BOEHMERT
Franz-Joseph-Strasse 38
80801 München (DE)

(54) **Improved protected trace minerals**

(57) A complex of kelp, non-ionic hydrophilic gum and metabolizable source of a trace mineral effective for protecting trace minerals against deleterious interactions within the stomach while providing maximal release of the protected trace minerals within the intestines where they can be effectively absorbed.

EP 0 712 581 A1

## Description

### FIELD OF THE INVENTION

The invention relates to products used as a nutritional source of trace minerals. Specifically, the invention relates to such products which have been formulated to improve absorption of the trace minerals from the product by protecting the trace minerals from adverse chemical reactions which tend to reduce absorption of the trace minerals in an animal's digestive tract.

### BACKGROUND OF THE INVENTION

Trace mineral nutrition is an aspect of animal nutrition which has been neglected until recent years. While most nutritionists agree that consumption of sufficient trace minerals is an important component of a healthy diet, many nutritionists continue to ignore trace mineral nutritional requirements. As a result of this lack of knowledge and general laissez-faire attitude towards trace mineral nutrition, many nutritionists simply incorporate generous quantities of trace minerals into the feeds which they formulate in an effort to ensure that the feed achieves the minimum nutritional requirements. This is often done with full knowledge that the vast majority of the trace minerals added to the feed are unavailable to the animal and simply pass through the digestive system.

This unsophisticated approach towards trace mineral nutrition can occasionally cause trace mineral deficiency in the animals. This peculiar situation is believed to be due to a biological response to the excessive but unavailable trace minerals passing through the digestive tract. The approach also creates problems in the handling and disposal of the animal feces due to contamination of the feces with high concentrations of the trace minerals.

Animal nutritionists are beginning to understand the importance of a well balanced trace mineral content in a feeding program, and have started focusing on this issue. Several "protected" trace mineral products have been developed in recent years in an effort to increase bioavailability of the minerals and thereby reduce the problems associated with the oversupply of trace minerals in the feed. Research suggests that the trace minerals are rendered unavailable within the digestive tract when precipitated by antagonists such as the phytates found in grains, and the phosphates commonly used as a nutritional source of calcium and/or phosphate in feeds.

Patent Nos. 3,764,341 and 3,876,810 (issued to Carbonniere) describe a nutritional trace mineral product which protects the trace minerals from adverse reactions by complexing the trace minerals with kelp. The patent describes the trace mineral / complex as a physical bonding between polysaccharide in the kelp and the trace minerals. However, based upon tests conducted since issuance of these patents, the complex appears to be chemical in nature with release of the trace mineral ions effected by an enzymatic break down of the complexing polysaccharide chains within the small intestine. This complex has proven quite effective in protecting the trace minerals and providing the minerals in readily available form, but typically releases the minerals within the small intestine at a rate which does not allow the entire supply of trace minerals to be released and absorbed during the normal residence time of the product within the digestive system.

Several patents, including United States Patent No. 3,463,858 (issued to Dean R. Anderson), disclose the use of amino acids to complex trace mineral ions and thereby protect them against detrimental interactions within the digestive tract. These complexes are claimed to be absorbed "as is" with the trace mineral released only after it crosses a cell membrane.

Patent No. 4,172,072 (issued to Harvey H. Ashmead) discloses reacting trace mineral ions with enzymatically treated proteins to produce an amino acid/protein complex of the minerals capable of protecting the minerals from unwanted chemical interactions within the digestive tract. However, these complexes have displayed a tendency to release the minerals in the stomach of the animal, thereby exposing the minerals to the adverse chemical environment in the stomach.

Patent No. 4,670,269 (issued to Mahmoud M. Abdel-Monem) describes a cobalt/acid complex formed by reacting cobalt salts with glucoheptonic acid. The patent indicates that the complex is useful for transporting cobalt to the microbial flora within the digestive tract where it promotes growth and maximum microbial activity.

While these various products and processes have improved the availability of trace minerals in feed supplements, research continues in an effort to develop superior products and processes capable of further enhancing the bioavailability of trace minerals within animal feed.

### SUMMARY OF THE INVENTION

I have discovered a unique blend of components effective for protecting trace minerals against deleterious interactions within the stomach while providing maximal release of the protected trace minerals within the small intestines where they can be effectively absorbed. The composition comprises kelp, a non-ionic hydrophilic gum, and a metabolizable source of at least one trace mineral.

The composition promotes the development of a healthy digestive system and thereby facilitates improved utilization of feed. There is also evidence suggesting a correlation between the consumption of the composition and improvements in immunological health.

## DETAILED DESCRIPTION OF THE INVENTION INCLUDING A BEST MODE

As utilized herein, including the claims, the term wt% refers to wt% of solids unless otherwise specified.

The protected trace mineral product is produced by reacting sea kelp, a non-ionic hydrophilic gum and a metabolizable source of at least one trace mineral in an aqueous environment with subsequent drying and grinding of the reaction product. The process is generally facilitated by heating the aqueous mixture to temperature of between about 150° to 200°F.

Without intending to be limited thereby, I believe that the product increases absorption of trace minerals from the product by initiating release of the minerals at an earlier stage of the digestive process (*i.e.*, in the lower portion of the stomach where the pH begins to rise), thus providing a longer absorption time within the digestive tract.

An additional benefit provided by the product, which is not known to be provided by any of the previously products, is an improved "antimicrobial" effect within the small intestines. Such improved antimicrobial effect is thought to be due to the prolonged release of certain metal ions from the product, such as copper, and the presence of various antimicrobial byproducts produced by the breakdown of the hydrophilic non-ionic gum.

The product includes about 10 to 80 wt% kelp, about 1 to 40 wt% gum and about 20 to 70 wt% source of trace minerals. The preferred formulation includes about 30 to 50 wt% kelp, about 6 to 10 wt% gum and about 45 to 70 wt% source of trace minerals.

Inclusion of less than about 10 wt% kelp results in a product capable of protecting only a limited quantity of trace minerals. Inclusion of greater than about 80 wt% kelp tend to delay the release of trace minerals from the product and thereby limit the length of the absorption time within the digestive tract. Substantially any commercially available kelp may be satisfactorily used in this complex, with the giant brown kelp *Macrocytic pyrifera* generally preferred because of its low cost and ready availability.

Inclusion of less than about 1 wt% non-ionic gum results in a product which tends to delay the release of trace minerals from the product and thereby limit the length of absorption time. Inclusion of greater than about 40 wt% non-ionic gum tends to degrade the protective capacity and protective ability of the product. As a general rule, the greater the concentration of non-ionic gum in the product, the faster the osmotic release of trace minerals from the product into the digestive tract. Unfortunately, while faster release of the trace minerals results in a greater utilization of the minerals, it also tends to increase the extent to which the minerals are release into the hostile acidic environment of the stomach where they are susceptible to being rendered unavailable.

Inclusion of less than about 20 wt% source of trace minerals requires consumption of an excessive quantity of the product in order to consume the recommended amount of trace minerals, while inclusion of greater than about 70 wt% results in the presence of unprotected trace minerals within the product which are quickly rendered unavailable.

Without intending to be limited thereby, it is believed that the protective capacity of the product (*i.e.*, the amount of trace minerals which can be protected) is dependent upon the alginate content of the product. The alginate content is contributed almost exclusively by the kelp, which is typically about 35 wt% alginate. Hence, a loading of 10 to 80 wt% kelp provides a loading of about 3.5 to 28 wt% alginate.

The ability of the non-ionic hydrophilic gum to increase the release rate of trace minerals from the complex is believed to be proportional to the extent of its hydration. Of particular interest are those non-ionic hydrophilic gums whose state of hydration is pH labile such that they are minimally hydrated at those pHs typically encountered in the stomach (*i.e.*, pHs of less than about 4) and maximally hydrated at those pHs typically encountered in the small intestines (*i.e.*, pHs of greater than about 6). Such gums facilitate both protection of the trace minerals in the stomach, where they are susceptible to being rendered unavailable, and release of the minerals in the small intestine where they are absorbed. Exemplary of such pH labile non-ionic gums is guar gum, which is minimally hydrated at a pH of about 3.5 and maximally hydrated at a pH of about 8. Guar gum is readily available from a number of suppliers.

The trace minerals universally identified as necessary to proper growth and general well-being include the divalent ions of Copper, Magnesium, Iron, Zinc, Manganese and Cobalt. Such trace minerals are readily available in sulfate salt form. Preferably, the product includes one or more of these trace minerals at the relative wt%, based upon the weight of trace mineral only, listed in Table One.

TABLE ONE

| TRACE MINERAL | RANGE OF METAL ION |
|---|---|
| Zinc | 0.1 to 20% |
| Copper | 0.1 to 15% |
| Manganese | 0.1 to 15% |
| Magnesium | 0.1 to 5% |
| Iron | 0.1 to 15% |
| Cobalt | 0.1 to 12% |

## EXPERIMENTAL

### FT-IR Testing Protocol

The technique known as FT-IR is useful for estimating the amount of copper ions chemically bound within products of the type disclosed herein. The procedure is conducted by placing 5 grams of product and 5 grams of water in a test tube to form a test sample. The test sample is placed in a Zinc Selenite ATR crystal and examined by infrared analysis. The water is subtracted from the scan to reveal the sulfate absorption band (1100 -1cm) and hydrogen bonding band (3000 to 3500 -1cm) for the product. These bands can then be translated into an approximate amount of free Cu++ in the sample which are interacting with the water by running a parallel aqueous copper sulfate sample of known concentration and comparing the size of its 3000 to 3500 band to that of the test sample. This translated concentration is then doubled to account for the Cu++ ions which are chemically attached to the alginate and therefore unable to interact with the water.

### Experiment 1

(*Copper Supplement*)

A kelp/gum/copper complex having the relative ratios of copper sulfate, kelp, guar gum and water set forth in Table Two was produced in accordance with the procedure outlined below.

Into a beaker equipped, with a magnetic stirrer and bunsen burner was placed 500 ml of water. The water was heated to about 190°F and 25 grams of copper sulfate added under constant stirring until dissolved. The dried kelp and guar gum particles were mixed together and added to the copper sulfate solution to form a solid/liquid mixture. The mixture was stirred for approximately 15 minutes until the kelp and guar gum were well saturated with the copper sulfate solution and the chemical reaction between the alginate and copper complete. The blended mixture was then (i) dried to a water content of approximately 3 to 7 wt% using a heated, forced air dryer, (ii) milled with a small grinder, and then passed through a sixteen mesh screen. The resulting product was subjected to FT-IR and found to contain approximately 12.5% total copper with about ½ chemically bound to the algin and the other ½ physically bound within the guar gum.

TABLE TWO

| INGREDIENT | PERCENTAGE BY WEIGHT |
|---|---|
| Copper Sulfate (25% Cu) | 25% |
| Kelp | 22% |
| Guar Gum | 3% |
| Water | 50% |
| TOTAL | 100% |

**Experiment 2**

(*Animal Study*)

An animal study investigating the ability of the kelp gum mineral complex of this invention to improve the feed efficiency of typical animal feeds was conducted by an independent testing organization. A first group of thirty four piglets (average starting weight of eleven pounds) was fed a standard pig starter ration into which was incorporated a kelp/mineral complex manufactured in accordance with United States Patent No. 3,764,341 and 3,876,810. A second group of thirty four piglets (also having an average starting weight of eleven pounds) was fed the identical pig starter ration into which was incorporated a kelp/gum/mineral complex manufactured in accordance with this invention. The general composition of typical pig starter rations is set forth below in Table Three. Both of the complex-containing feeds were formulated to include identical trace minerals at the levels set forth in Table Four. The average daily feed intake (ADFI), average daily weight gain (ADG), average daily feed efficiency (F/G Ratio) and mortality were monitored and recorded. The results of the trial are set forth below in Table Five.

TABLE THREE

| Ingredient | Amount |
|---|---|
| Corn | 40 wt% |
| Steamed Rolled Oats | 20 wt% |
| Fish Meal | 10 wt% |
| Soybean Proteins | 5 wt% |
| Milk Products (whey and skim) | 10 wt% |
| Porcine Plasma Protein | 2.5 to 5 wt% |
| Fat &/or Vegetable Oil | 3 to 5 wt% |
| Macro Minerals: | |
| Calcium Carbonate | 1 wt% calcium |
| Dicalcium Phosphate | 0.85 wt% phosphorous |
| Salt | 0.25 to 0.5 wt% salt |
| Trace Minerals: | |
| Manganese | 40 ppm |
| Zinc | 330 ppm |
| Iron | 100 ppm |
| Copper | 250 ppm |
| Vitamins | In accordance with National Required Concentrations |
| Medications: | |
| Tylosin | 100 grams |
| Sulfa/Ton | 100 grams |

TABLE FOUR

| TRACE MINERAL | CONCENTRATION |
|---|---|
| Zinc | 330 ppm |
| Copper | 250 ppm |
| Manganese | 40 ppm |
| Iron | 100 ppm |

TABLE FIVE

| | Kelp/Mineral Complex | Kelp/Gum/Mineral Complex |
|---|---|---|
| 7 day results: | | |
| ADFI | 0.37 lbs. | 0.30 lbs. |
| ADG | 0.32 lbs. | 0.29 lbs. |
| Feed/Gain Ratio | 1.32 | 1.06 |
| | | (20% Improved) |
| 14 day results: | | |
| ADFI | 0.58 lbs. | 0.54 lbs. |
| ADG | 0.39 lbs. | 0.40 lbs. |
| Feed/Gain Ratio | 1.66 | 1.48 (10% Improved) |
| 35 day results: | | |
| ADFI | 1.11 lbs. | 0.99 lbs. |
| ADG | 0.72 lbs. | 0.69 lbs. |
| Feed/Gain Ratio | 1.56 | 1.43 |
| | | (8.5% Improved) |

The feed conversion ratio of the kelp/gum/mineral complex showed a 20% better feed conversion rate at 7 days, 10% better conversion at 14 days and an 8.5% better conversion rate at 35 days (conclusion of the trial). An 8.5% decrease in the amount of feed required to raise a piglet from 11# to approximately 35# is a commercially significant improvement.

It is noted that two pigs from the group fed the kelp/mineral complex were lost to scours while none were lost from the group fed the kelp/gum/mineral complex of this invention. Scours is a disease caused by the propagation of pathogenic bacteria (*e.g., E. coli*) in the intestinal tract. Such results suggests that the kelp/gum/mineral complex of this invention provides an antibacterial benefit within the digestive tract of the animal.

## Claims

1. A product comprising a chemically bonded combination of kelp, a non-ionic hydrophilic gum, and a metabolizable source of at least one trace mineral.

2. The product of claim 1 wherein the product comprises about 10 to 80 wt% kelp, about 1 to 40 wt% non-ionic hydrophilic gum, and about 20 to 70 wt% trace mineral source.

3. The product of claim 1 wherein the product comprises about 30 to 50 wt% kelp, about 6 to 10 wt% pH labile hydrophilic gum, and about 45 to 70 wt% trace mineral source.

4. The product of one of the preceding claims wherein the non-ionic hydrophilic gum is guar gum.

5. The product of one of the preceding claims, wherein the product includes metabolizable sources of at least three different trace minerals selected from the group consisting of Copper, Magnesium, Iron, Zinc, Manganese and Cobalt.

6. The product of one of the preceding claims wherein the kelp, gum and trace mineral source are ionically bonded to form an amalgamated product.

7. A product comprising an amalgamation of a kelp, a non-ionic hydrophilic gum and a metabolizable source of at least one trace mineral wherein the product includes at least 3 wt% gum.

8. The product of claim 7 wherein the product comprises about 10 to 80 wt% kelp, about 1 to 40 wt% non-ionic hydrophilic gum, and about 20 to 70 wt% trace mineral source.

9. The product of claim 7 wherein the product comprises about 30 to 50 wt% kelp, about 6 to 10 wt% pH labile hydrophilic gum, and about 45 to 70 wt% trace mineral source.

10. The product of one of claims 7 to 9, wherein the non-ionic hydrophilic gum is guar gum.

11. A mineral supplement produced by the process of (i) blending kelp, a non-ionic hydrophilic gum, and a metabolizable source of at least one trace mineral, (ii) heating the blend to a temperature sufficient to chemically bond the kelp, gum and trace mineral source to form a reaction product, and (iii) drying the reaction product to form the mineral supplement.

12. The supplement of claim 11 wherein the supplement comprises about 10 to 80 wt% kelp, about 1 to 40% non-ionic hydrophilic gum, and about 20 to 70 wt% trace mineral source.

13. The supplement of claim 11 wherein the supplement comprises aobut 30 to 50 wt% kelp, about 6 to 10 wt% pH labile hydrophilic gum, and about 45 to 70 wt% trace

14. The supplement of one of claims 11 to 13, wherein the non-ionic hydrophilic gum is guar gum.

15. The supplement of one of claims 11 to 14, wherein the blend is suspended in an aqueous environment during heating.

16. The supplement of one of claims 11 to 15, wherein the blend is heated to about 150° to 200°F.

**European Patent Office**

## EUROPEAN SEARCH REPORT

Application Number

EP 95 11 7791

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | US-A-3 876 810 (JOHN G. CARBONNIERE) * the whole document * | 1 | A23K1/175 A23L1/304 |
| D,A | US-A-3 764 341 (JOHN G. CARBONNIERE) * the whole document * | 1 | |
| A | JOURNAL OF FOOD SCIENCE, vol. 52, no. 5, 1987 CHICAGO US, pages 1414-1419, STEPHEN R. PLATT ET AL. 'Mineral binding characteristics of lignin, guar gum, cellulose, pectin and neutral detergent fiber under simulated duodenal pH conditions' * page 1414, column 1, Abstract * * page 1415, column 1, paragraph 3 * * page 1418; table 1 * | 1 | |
| A | GB-A-990 869 (KENTUCKY RESEARCH FOUNDATION) * page 11; table V * | 1 | |
| A | US-A-3 900 572 (HERBERT R. PEER) * column 2, line 32 - line 46 * * column 4, line 38 - column 5, line 43 * * claims 1,2 * | 1 | TECHNICAL FIELDS SEARCHED (Int.Cl.6) A23K A23L |
| A | DATABASE WPI Week 9527 Derwent Publications Ltd., London, GB; AN 95-200752 & CN-A-1 084 360 (UNIV HEBEI) , 30 March 1994 * abstract * | 1 | |
| A | US-A-4 935 447 (JUDSON C. PHILIPS ET AL.) * column 1, line 58 - column 2, line 9 * | 1 | |

The present search report has been drawn up for all claims

| Place of search | Date of completion of the search | Examiner |
|---|---|---|
| THE HAGUE | 14 February 1996 | Dekeirel, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)